# EUROPEAN PATENT SPECIFICATION

(11) **EP 4 056 977 B1**
(45) Date of publication and mention of the grant of the patent: **04.12.2024**
(21) Application number: 22160638.7
(22) Date of filing: 08.03.2022
(51) Int. Cl.: G01M 3/10, H02K 5/22, G01M 3/32

(54) **SYSTEM AND METHOD FOR CARRYING OUT LEAKAGE TESTS**
SYSTEM UND VERFAHREN ZUR DURCHFÜHRUNG VON LECKAGETESTS
SYSTÈME ET PROCÉDÉ POUR EFFECTUER DES TESTS DE FUITE

(30) Priority: 09.03.2021 IT 202100005513
(43) Date of publication of application: 14.09.2022
(73) Proprietor: TE Connectivity Italia Distribution S.r.l., 10093 Collegno (TO) (IT)
(72) Inventor: DI MAGGIO, Stanislas, Torino (IT); FARINOLA, Marcello, Torino (IT); GENTA, Alessandro, Torino (IT)
(74) Representative: Grünecker Patent- und Rechtsanwälte PartG mbB

(56) References cited:
- EP-A2- 2 022 159
- CN-U- 202 735 052
- CN-U- 209 689 857
- CN-U- 209 992 130
- CN-U- 212 278 029
- JP-A- S54 159 287
- US-A1- 2009 267 372

## Description

The present invention refers to the technical field of electrical connectors. In particular, the present invention refers to a system and a method for carrying out a leakage test on electrical connectors.

### STATE OF THE ART

End-of-line leakage tests are commonly performed at the state of the art to detect any leakage of air, for instance to detect any leakage of air along the length of electrical wires and therefore to ensure that the electrical wires are air tight and that are protected against the entrance of water and/or dust.

Document DE 3931340 discloses a method for pneumatic sheath testing of polyethylene insulated cables that are not longitudinally watertight, whereby leaks can be located and eliminated on site using a non-toxic test gas, before the cable newly laid in the cable trench is put into operation. Document DE 3931340 also discloses a detachable connection element for sensitive cable surface materials and different cable outer diameters, which, on the one hand, ensures reliable tightness when flushing in a test gas and, on the other hand, allows its individual system parts to be attached and detached frequently and quickly without the use of tools.

Document US 2016336094 refers to a shielded electric wire including a shielding layer. Air leakage tests are performed on the shielded electric wire by a method in which one end of the shielded electric wire is hermetically sealed and is immersed in a water tank filled with water and compressed air with 10 kPa is pumped from the other end. Specifically, the compressed air with 10 kPa is first pumped for 30 seconds, and in the case of no leak (that is, the case where bubbles are not blown out of one end side of the electric wire), compressed air with the pressure increased by 10 kPa is pumped. Then, as long as there is no leak, compressed airs with the pressures increased by 10 kPa are sequentially pumped, and a pressure of the compressed air at the time of an air leak is measured. Document CN 209992130U discloses a device for checking the air tightness of an electronic endoscope.

The main disadvantage of standard leakage tests is that the air is injected through the wires: in this way, the leakage tests take time and are difficult to be performed.

It is therefore an object of the present invention to provide a system and a method for accelerating and facilitating leakage tests on electrical wires.

### SUMMARY

The present invention is based on the idea of providing a sealing cover for an electrical component, comprising a through-hole for injecting air during leakage tests and a plug assembly specifically designed for reversibly sealing and closing the through-hole, once leakage tests have been completed. In this way, the operation of leakage tests is accelerated and simplified.

According to an embodiment of the present invention, a sealing assembly for sealing an electrical component having an opening is provided, the sealing assembly comprising:
- a cover adapted to be coupled with the electrical component; and
- a plug assembly;
wherein the cover has a through-hole for injecting air during leakage tests of the electrical component, and engaging elements for fixing the plug assembly to the cover, and the plug assembly comprises a single wire seal for sealing the through-hole and locking elements to be reversibly engaged with the engaging elements, so that, when the plug assembly is inserted into the through-hole, the cover is adapted to seal the opening of the electrical component in an airtight manner.

This configuration is advantageous because the sealing assembly does not only assure that the electrical component is sealed against the entrance of water and dust, in an airtight manner, but it also makes simpler, more repeatable and more efficient the process of performing leakage tests. In this way, leakage tests may also be performed during usage of the electrical component and it is not necessary to disassemble it and to inject air through the electrical wires. For instance, the correct sealing of the cover and of the electrical component at their engaging interface, can be checked by injecting air directly through the through-hole and not through the wires inserted into the electrical component, as performed in the prior art.

Moreover, the advantage of this configuration is that the sealing assembly, according to the present invention, may be employed for any electrical component having an opening that needs to be closed and sealed in an airtight manner against the entrance of water and dust. In this way performing of leakage tests is simplified and the operation speed is improved.

Preferably, the sealing assembly is used for high-voltage applications, that is, for electrical components working with a voltage greater than 400 V. Preferably, the cover is made of polyimide material, which is a flame-retardant material and which is characterized by a high CTI value.

According to a preferred embodiment, the electrical component comprises an opening, which is closed and sealed against the entrance of water and dust by means of the sealing assembly. Preferably, the sealing assembly comprises a cover that is placed on the opening of the electrical component and that comprises a through-hole, which is, on its turn, sealed and closed by means of the plug assembly. Preferably, the plug assembly reversibly seals and closes the cover.

In a preferred embodiment, when it is necessary to perform a leakage test, the plug assembly may be removed from the cover and a pipe may be inserted into the through-hole for injecting air and performing the leakage test. Preferably, leakages at the interface between the cover and the electrical component are tested, so that the components involved in the sealing process are tested. For example, the portion of the electrical wire that is located at the interface with the cover may also be tested. Preferably, after performing the leakage test, the plug assembly is again placed in its original positon, so that the electrical component is again sealed by the sealing assembly and may be used for different applications.

According to the present invention, a sealing assembly, wherein the plug assembly comprises a pin, on which the single wire seal is inserted, and retaining elements formed at the base of the pin for fixing the position of the single wire seal on the pin, is provided. The advantage of this configuration is that the plug assembly provides sealing of the through-hole in a simple and reliable way. Moreover, the plug assembly comprises components that can be easily assembled and disassembled, and that can be easily replaced in case of damage or during maintenance operations. Moreover, the retaining elements fix the position of the single wire seal on the pin, so that the single wire seal is not lost during assembly and disassembly of the plug on the cover.

In a preferred embodiment, the plug assembly comprises a flat surface comprising a flange from which a pin protrudes. A single wire seal is inserted on the pin, so that the pin is completely covered by the single wire seal. At the base of the pin, retaining elements are formed to keep the single wire seal in place during operation.

Preferably, the single wire seal may be a rubber element having a cylindrical shape and having multiple sealing surfaces in order to assure better sealing. For example, the single wire seal may be a rubber element comprising a three-lip profile configuration, wherein the design creates three layers of redundant sealing.

The retaining elements fix the position of the single wire seal on the pin and therefore it is not necessary to crimp the seal onto the pin, as commonly used in prior art. In this way, the single wire seal can be easily removed and replaced during maintenance operations.

According to the present invention, a sealing assembly, wherein the retaining elements are protruding elements configured to engage a mating recess formed on the single wire seal, is provided.

This configuration has the advantage that the single wire seal does not need to be crimped onto the pin, but it is kept in position by means of the protruding elements, which engage at least one recess formed between the three-lip profile. Moreover, the retaining elements fix the position of the single wire seal on the pin, so that the single wire seal is not lost during assembly and disassembly of the plug on the cover.

According to a further embodiment, a sealing assembly, wherein the retaining elements comprise at least three protruding elements symmetrically formed around the pin, is provided.

This configuration has the advantage that a stable retaining of the single wire seal is assured. Preferably, the retaining elements are three protruding elements symmetrically placed around the pin, that is, spaced at an angle of 120°. For example, the protruding elements may also be a number of four and they can be placed at 90° from one another.

According to a further embodiment of the present invention, a sealing assembly, wherein the through-hole comprises a pass-through channel for inserting the single wire seal mounted on the pin, is provided.

This configuration has the advantage that the pass-through channel of the through-hole is reliably sealed by inserting the single wire seal mounted on the pin of the plug assembly.

According to a preferred embodiment, the pass-through channel of the through-hole has a slightly smaller diameter with respect to the diameter of the single wire seal inserted into the pin, so that the difference between the outer diameter of the seal and the diameter of the cavity generates a radial compression of the seal and a consequent sealing pressure at the interface.

According to a further embodiment, a sealing assembly, wherein the locking elements have flaps and wherein the through-hole further comprises a cavity surrounding the pass-through channel and configured for receiving the flaps of the locking elements of the plug assembly, is provided.

This configuration has the advantage that the plug assembly is kept in its position not only by means of the engagement between the locking elements of the plug assembly and the engaging elements of the cover, but also because of the geometry of the through-hole.

According to a preferred configuration, the through-hole comprises two concentric cylindrical parts, that is, a central pass-through channel and a surrounding cavity. Preferably, the cavity is not a pass-through cavity.

Preferably, the plug assembly has a configuration such that the locking elements comprise elongated flaps that are configured to be received into the cavity, in order to further fix the relative position between the plug assembly and the through-hole. Preferably, the elongated flaps comprise locking tabs, which are adapted to engage the engaging elements.

According to a further embodiment of the present invention, a sealing assembly, wherein the cover comprises at least one first surface containing the hole and four lateral surfaces perpendicular to the first surface, thus defining a housing for accommodating a portion of the electrical component, is provided.

This configuration has the advantage that the cover is designed so as to accommodate and cover a portion of the electrical component and to protect it from the entrance of water and dust.

According to a preferred embodiment, the electrical component has an opening, which is closed with a sealing cover having four lateral surfaces and a first surface perpendicular to the lateral surfaces and defining an opening for accommodating a portion of the electrical component. Preferably, a though-hole is placed on the first surface of the cover. For example, the lateral surfaces may comprise inlets for receiving electrical wires.

According to an example not covered by the appended claims, a sealing assembly, wherein the electrical component comprises a terminal box comprising a plurality of electrical terminals, is provided.

This configuration has the advantage that the terminal box can be covered and sealed against the entrance of water and dust by means of the sealing assembly and that the process of performing leakage tests may be simplified and sped up, since the pressurized air may be injected directly through the through-hole of the cover.

Preferably, a terminal box indicates any electrical component for accommodating a plurality of electrical terminals and/or wires and/or printed circuit boards. For example, the terminal box may have an opening, which can be covered with the sealing cover. In this way, the interface between the cover and the terminal box is sealed against the entrance of water and dust. For example, leakage tests may be performed to check that the interface between the cover and the terminal box is airtight.

According to a further embodiment of the present invention, a sealing assembly, wherein the cover is provided with one or more inlets for inserting one or more electrical wires, respectively, is provided.

This configuration has the advantage that the cover of the sealing assembly may cover and seal the electrical component and, at the same time, an electrical connection may be established between the electrical component and the electrical wires inserted into the inlets of the sealing cover.

According to a preferred configuration, the electrical wires, which are inserted into the cover, may be connected to the terminals contained in the electrical component. For instance, the electrical wires may have different diameters and dimensions. Preferably, the sealing assembly of the present invention is used for high-voltage applications.

According to an example not covered by the appended claims, a sealing assembly, wherein the at least one electrical wire is connected to the at least one electrical terminal of the terminal box, is provided.

This configuration has the advantage that the terminal box containing the electrical terminals to be connected to the electrical wires is sealed and protected against the entrance of water and dust. When it is necessary to check and test that the interface between the cover and the terminal box is airtight, leakage tests may be performed easily and fast, by removing the plug assembly on the cover, and by injecting air directly into the through-hole, and not through the wires connected to the cover, as is done in prior art.

Preferably, the electrical wires are used for high-voltage applications. Preferably, configurations wherein the electrical wires may be set at 90° or at 180° with respect to the terminals may be realized.

According to a further embodiment of the present invention, a sealed system is provided, the sealed system comprising:
- the sealing assembly, as the one presented above;
- a terminal box comprising a plurality of electrical terminals,
wherein the terminal box has an opening and the cover is adapted to close the opening and to seal the terminal box in an airtight manner.

This configuration has the advantage that the terminal box is sealed against the entrance of water and dust and that, when it is necessary to perform leakage tests, they can be performed in a simple and fast way, because the air can be injected directly into the through-hole of the cover of the sealing assembly.

For example, leakage tests may be performed during the lifetime of the terminal box and it is not required to disassemble it and to inject air through the electrical wires of the terminal box, as done in prior art.

According to an example not covered by the appended claims, a sealed system is provided, the sealed system comprising:
- the sealing assembly as described above;
- an electrical component;
wherein the electrical component has an opening and the cover is adapted to close the opening and to seal the electrical component in an air tight manner.

According to a further embodiment of the present invention, a sealed system as the one described above is provided, wherein the cover further comprises one or more inlets for inserting one or more electrical wires in an airtight manner, and the sealed system is configured so that, when the sealed system is assembled and the electrical wires are inserted into the inlets, the sealed system is sealed in an airtight manner.

The advantage of this configuration is that, the whole electrical system comprising the terminal box and the electrical wires is sealed and protected against the entrance of water and dust and that, when there is a need to check that the interface between the terminal box and the cover is airtight, air leakage tests may be performed in an easy and fast way.

According to a preferred embodiment, the cover comprises a first surface and four lateral surfaces perpendicular to the first surface. Preferably, a plurality of electrical wires are inserted into corresponding inlets placed on one or more lateral surfaces of the cover. Preferably, configurations wherein the cables are set at 90° or at 180° with respect to terminals of the terminal box may be realized. It has to be understood that, when the electrical wires are inserted into the inlets, the cover is sealed at this interface. In this way, when the cover comprising the electrical wires inserted into the inlets is used to close the terminal box, the whole system is sealed in an airtight manner, because both the interface between the through-hole and the plug assembly and the interface between the inlets and the electrical wires are sealed. Preferably, leakage tests are performed to test potential leakages at the interface between the cover and the electrical component, so that the components involved in the sealing process are tested. Preferably, the cover is used to close the terminal box once it already comprises the electrical wiring.

According to a further embodiment of the present invention, a disengaging element for disengaging the locking elements from the engaging elements and removing the plug assembly from the cover of the sealing assembly described above, is provided, wherein the disengaging element comprises a gripping part and one or more protruding elements to be inserted into the locking elements to disengage them from the engaging elements.

This configuration has the advantage that the plug assembly can be easily removed from the cover, when it is necessary to perform leakage tests. The disengaging element is preferably made of polyimide, preferably of the same material as the cover and the plug assembly.

According to a preferred embodiment, the disengaging element comprises a gripping part, which is a flat part to be gripped by an operator. The protruding elements comprise, for instance, two wedge-shaped elements that protrude from the gripping part and are configured to be inserted into the locking elements of the plug assembly to disengage them from the engaging elements of the cover. Preferably, the protruding elements are slightly tilted with respect to the splitting line between the gripping part and the protruding elements. Preferably, the protruding elements are bent, so as to slide along the engaging elements of the cover, to press the locking elements and to disengage them from the engaging elements.

According to a further embodiment of the present invention, a method for performing leakage tests on an electrical component having an opening is provided, the method comprising:
a) Mounting the sealing assembly, as the one described above, on the electrical component;
b) Removing the plug assembly;
c) Injecting air directly through the through-hole; and
d) Detecting air leakage of the electrical component.

The advantage of this configuration is that the sealing assembly described above can be easily mounted on any electrical component having an opening to be sealed and may be used for performing leakage tests in a simple, smart and repeatable way. In fact, the air can be injected directly through the through-hole of the cover and leakages of the electrical component can be easily detected.

Preferably, this method is used to test electrical components for high-voltage applications. Preferably, according to this method, leakage tests may be performed during the life time of the electrical component and it is not necessary to disassemble it and/or to modify its structure for performing the leakage test, because the cover for sealing the electrical component already includes a sealable through-hole for injecting pressurized air into the cover.

Preferably, the leakage test is performed for testing if the interface between the cover and the electrical component is sealed, so that the components involved in the sealing process are tested. For example, the portion of the electrical wire that is located at the interface with the cover may also be tested.

Preferably, the plug assembly may be easily removed by means of the disengaging elements described above.

In a preferred embodiment, pressurized air is injected by means of a pipe directly inserted into the through-hole.

According to a further embodiment of the present invention, a method for performing leakage tests is provided, as the one described above, wherein the method further comprises the step of reversibly closing the through-hole by means of the plug assembly.

This configuration has the advantage that, after performing the leakage test, the system can be tightly sealed against water and dust. In fact, the configuration of the single wire seal assures a perfect sealing of the through-hole after insertion of the plug assembly. Therefore, if leakage tests confirm that the electrical component is sealed in an airtight manner, the entire system is sealed in an airtight manner, after placing the plug assembly in the through-hole of the cover.

Preferably, the plug assembly is placed on the cover and fixed there by means of the locking elements and the engaging elements. Preferably, the single wire seal of the plug assembly assures that the through-hole is tightly sealed and closed, and protected against the entrance of water and dust. The plug assembly, according to the present invention, is advantageous because it can easily be mounted and unmounted on the cover of the sealing assembly. Moreover, the single wire seal of the plug assembly has a simple structure and can easily be replaced in case of failure or damage during operation.

### FIGURES

The present invention will be described with reference to the attached figures in which the same reference numerals and/or signs indicate the same part and/or similar and/or corresponding parts of the machine. In the figures:
Figure 1 schematically illustrates a three-dimensional view of a sealing assembly comprising a sealing cover provided with a through-hole and a corresponding plug assembly, according to an embodiment of the present invention.
Figure 2 schematically illustrates a three-dimensional view of a sealing assembly mounted on a terminal box, according to an embodiment of the present invention.
Figure 3 schematically illustrates a three-dimensional view of a plug assembly, according to an embodiment of the present invention.
Figure 4 schematically illustrates a sectional view of a plug assembly, according to an embodiment of the present invention.
Figure 5 schematically illustrates a three-dimensional top view of the plug assembly comprising locking elements, according to an embodiment of the present invention.
Figure 6 schematically illustrates a sectional view of a plug assembly inserted into the corresponding hole of the sealing cover, according to an embodiment of the present invention.
Figure 7 schematically illustrates a three-dimensional view of a disengaging element, according to an embodiment of the present invention.
Figure 8 schematically illustrates a three-dimensional view of a sealing assembly comprising electrical wires inserted into the corresponding inlets, according to an embodiment of the present invention.
Figure 9 schematically illustrates a three-dimensional view of a sealing assembly comprising electrical wires inserted into the corresponding inlets, during a leakage test, according to an embodiment of the present invention.

### DESCRIPTION

In the following, the present invention is described with reference to particular embodiments as shown in the enclosed drawings. Nevertheless, the present invention is not limited to the particular embodiments described in the following detailed description and shown in the figures, but, instead, the embodiments described simply exemplify several aspects of the present invention, the scope of which is defined by the appended claims.

Further modifications and variations of the present invention will be clear for the person skilled in the art. Therefore, the present description has to be considered as including all the modifications and/or variations of the present invention, the scope of which is defined by the appended claims.

For simplicity, identical or corresponding components are indicated in the figures with the same reference numbers.

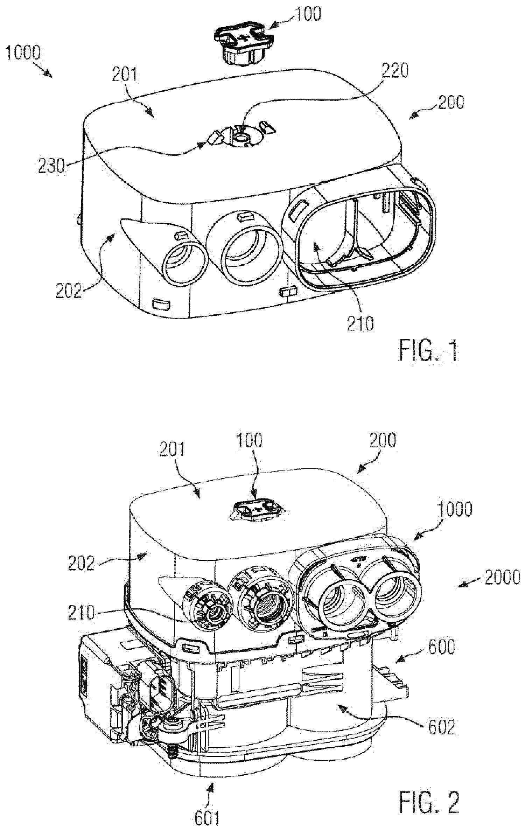

A sealing assembly 1000, comprising a cover 200 for sealing an electrical component and a plug assembly 100, which can be realized according to the present invention, is schematically illustrated in Figure 1. Preferably, the sealing assembly 1000, according to the present invention, is used for sealing electrical components used in high voltage applications. The sealing assembly 1000 has the advantage that it is adapted to seal electrical components and, at the same time, to simplify and speed up leakage tests carried out on the electrical components.

The cover 200 is designed to seal any electrical component having an opening, wherein it is necessary to seal the opening of the electrical component against the entrance of water and dust. For instance, the electrical component may be a terminal box. The cover 200, which is shown in Figure 1, further comprises four inlets 210 for accommodating electrical wires that can be connected to the terminals of the electrical component closed by the sealing cover. The inlets 210 are formed on a lateral surface 202. It is clear that, even if four inlets 210 for accommodating corresponding wires are represented in Figure 1, any number of inlets could be realized in the cover 200 according to the present invention, for instance one, two, three, five, six, or more inlets. Moreover, the inlets 210 may be formed on any surface 201, 202 of the cover 200.

In an alternative embodiment (not shown), the cover 200 may also not comprise any inlet for inserting electrical wires and may be configured to simply cover and seal an opening of an electrical component.

Figure 2 represents the sealed system 2000 comprising the sealing assembly 1000 mounted on a terminal box 600, according to an embodiment of the present invention. The terminal box 600 may indicate any electrical component comprising electrical terminals, printed circuit boards and/or electrical connections. The electrical connections of the terminal box 600 may be connected to electrical wires inserted into the inlets 210 of the cover 200.

The terminal box 600 comprises four lateral surfaces 602 and a first surface 601 perpendicular to the four lateral surfaces, which define an housing for accommodating the electrical terminals. The side of the terminal box 600 opposite to the first surface 601 is sealed by the cover 200 and it is protected against the entrance of water and dust. Preferably, a lip of a second sealing material is placed around the inner perimeter of the terminal box 600, defined by the lateral surfaces 602, for assuring an even more reliable sealing between the cover 200 and the terminal box 600. Leakage tests may be performed to test the correct sealing at the interface between the cover 200 and the terminal box 600. The configuration of the cover 200 of the sealing assembly 1000 has the advantage to improve the serviceability and to simplify the leakage tests.

As illustrated in Figure 1, the cover 200 comprises four lateral surfaces 202 and a first surface 201 perpendicular to the four lateral surfaces, which define an housing for accommodating a portion of the electrical component or of the terminal box 600, once it has been mounted on the opening of the electrical component or of the terminal box 600. A through-hole 220 for injecting air during leakage tests is integrated in the first surface 201 of the cover 200. Two engaging elements 230 are placed around the through-hole 220 for engaging corresponding locking means of the plug assembly 100. The plug assembly 100 is configured to reversibly close the through-hole 220 of the cover 200. It has to be understood that when the plug assembly 100 is inserted into the through-hole 220 of the cover 220, the cover 200 is adapted to seal in an airtight manner the electrical component to which it is attached. On the other hand, when the plug assembly 100 is removed from the through-hole 220, air can pass through the cover 200 and reach the electrical component.

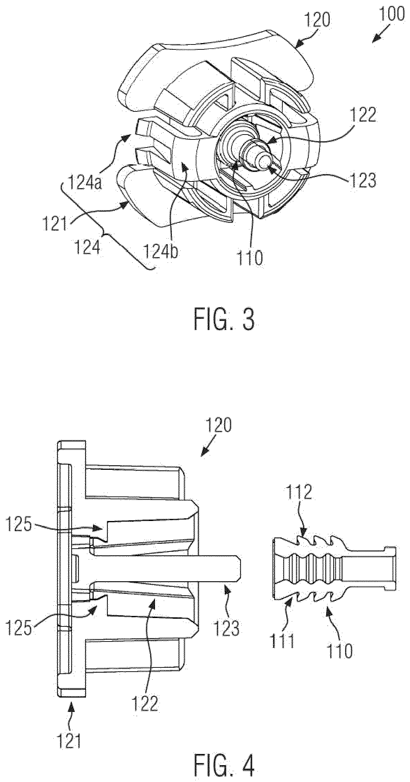

The plug assembly 100, according to the present invention is represented in detail in Figure 3. The plug assembly 100 comprises a plug body 120 having a cavity 122 and a flange 121. A pin 123 is formed inside the cavity 122 and protrudes from the opposite side with respect to the flange 121. Two locking elements 124 are formed on the plug body 120. The end part of each locking element 124a is configured to engage the corresponding engaging element 230 of the cover 200 and to fix the relative position of the plug assembly 100 with respect to the cover 200. A single wire seal 110 is inserted onto the pin 123, in order to assure a sealing of the through-hole 220, when the plug assembly 100 is inserted into the through-hole 220 of the cover 200.

The plug assembly 100 is also represented in Figure 4, wherein a section of the plug body 120 and of the single wire seal 110 are represented. The plug body 120 comprises a flange 121 and a pin 123 formed inside the cavity 122, on the flange 121 and protruding from the opposite part with respect to the flange portion 121. The single wire seal 110 can be inserted on the pin 123.

The single wire seal 110 is characterized by an inner lip profile, comprising a plurality of lips 112, separated by a plurality of recesses 111. Preferably, the inner lip profile comprises a three-lip configuration, as the one represented in Figure 4. The three-lip configuration creates three layers of redundant sealing and therefore assures a continuous sealing surface and an airtight sealing. The single wire seal 110 is preferably made of silicon rubber; this rubber offers high mechanical resistance and can work in a very wide window of operating temperatures.

When the plug assembly 100 is assembled, the single wire seal 110 is inserted onto the pin 123, into the cavity 122 of the plug body 120. The difference between the outer diameter of the single wire seal 110 and the diameter of the cavity 122 generates a radial compression of the single wire seal 110 and a consequent sealing pressure at the interface with the cavity 122. This interface causes additional closure pressure on the interface of the pin 123, increasing the tightness level towards the pin 123.

Retaining features 125 for fixing the position of the single wire seal 110 inside the cavity 122 are formed at the base of the flange portion 121, around the pin 123. The retaining features 125 ensure that the single wire seal 110 is not lost during assembly and disassembly of the plug assembly 100 on the cover 200. The retaining features comprise protruding elements 125 which are bent with respect to the flange 121 and which are configured to fit into a first recess 111 of the single wire seal 110. Preferably, the protruding elements 125 consist of three protruding elements displaced symmetrically around the pin 123, and spaced at 120° from one another. Other configurations are also possible, wherein four or more protruding elements 125 are placed symmetrically around the pin 123; for instance, a configuration in which four protruding elements 125 are spaced at 90° from one another, around the pin.

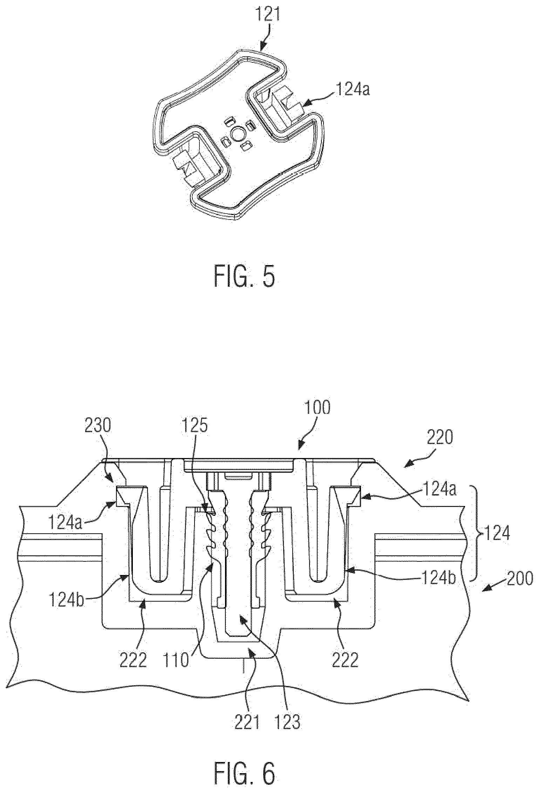

A top view of the plug assembly 100 is schematically illustrated in Figure 5, wherein the part of the plug assembly 100 oriented towards the outside of the cover 200 is shown. In Figure 5, it is possible to see that two locking means 124, comprising two locking tabs 124a are placed on two opposite sides of the flange portion 121. The tab portions 124a are configured to engage the complementary engaging elements 230 of the cover 200 and to fix the relative position of the plug assembly 100 with respect to the cover 200. For instance, the engaging elements 230 may be engagement noses and the locking tabs 124a may have a slit for accommodating the engagement nose 230 and for snap-engaging the two elements.

A sectional view of the plug assembly 100 inserted into the through-hole 220 of the cover 200 is schematically illustrated in Figure 6. As can be seen in Figure 6, the through-hole 220 of the cover 200 comprises two concentric cylindrical portions, in particular a central pass-through channel 221 and a surrounding cavity 222. The sealing assembly 1000 is configured in such a way that, when the plug assembly 100 is mounted onto the cover 200, the pin 123, accommodating the single wire seal 110, is inserted into the pass-through channel 221. The inner lip profile of the single wire seal 110 assures good sealing of the pass-through channel 221, when the plug 120 is inserted into the through-hole 220. The single wire seal 110 is oriented so that a first recess 111 is engaged with the retaining features 125 of the plug body 120, so that the single wire seal 110 remains in its position during assembling and disassembling of the sealing assembly 1000.

When the plug assembly 100 is inserted into the through-hole 220 of the cover 200, a perfect sealing of the pass-through channel 221 is assured by the configuration of the single wire seal 110. The retaining of the single wire seal 110 in its position is assured by the retaining elements 125. In this case, if the single wire seal 110 is damaged during operation, it can easily be replaced with a new single wire seal 110 without a need to replace the whole plug assembly 100.

As it can be seen in Figure 6, the plug assembly 100 further comprises locking elements 124 with a flap portion 124b, which is configured to be inserted into the cavity 222 of the through-hole 220. In this way, the position of the plug assembly 100 with respect to the cover 200 is fixed not only by the locking tabs 124a, engaged with the engaging elements 230, but also by the locking elements 124, because the flap portions 124b are stably inserted into the cavity 222.

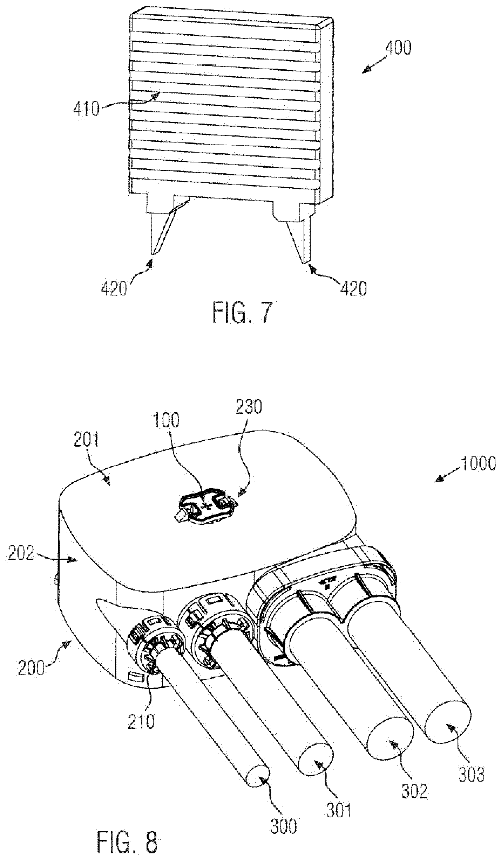

The sealing assembly 1000, according to the present invention, may be further provided with a disengaging element 400 for easily removing the plug assembly 100 from the cover 200. The disengaging element 400 is schematically represented in Figure 7. The disengaging element 400 comprises a gripping part 410 and two protruding elements 420 to be inserted into the locking elements 124, in order to disengage them from the engaging elements 230. The gripping part 410 is a flat part, which can be easily gripped and handled by an operator. The protruding elements 420 are two wedge-shaped elements, which are slightly bent with respect to the line defining the base of the flat element 410. The two protruding elements 420 are configured to be inserted into the tabs 124a of the locking elements 124, in order to remove them from their engaging position with respect to the engaging elements 230. In other words, the protruding elements 420, pressing on the flap portions 124b, make the locking tabs 124a slide away from the engagement noses 230, thus disengaging the two elements.

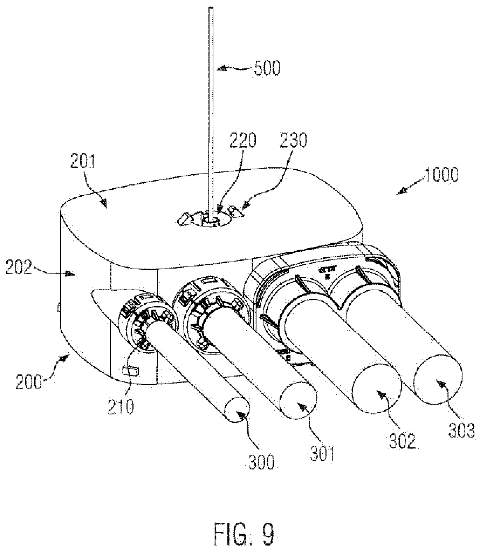

The operation of the sealing assembly 1000, according to the present invention, is schematically illustrated with reference to Figures 8 and 9.

In Figure 8, the sealing assembly 1000, according to the present invention, comprising four inlets 210, which accommodate corresponding electrical wires 300, 301, 302, 303, is schematically represented. The electrical wires 300, 301, 302, 303 of Figure 8 have different dimensions and the inlets 210 have different diameters, mating the diameters of the corresponding electrical wires. The plug assembly 100 is initially inserted into the cover 200 and, in this way, the through-hole 220 is air tightly-sealed by the plug assembly 100, so that air cannot penetrate through the first surface 201 of the cover 200. Moreover, the inlets 210 are adapted so that the interface between the electrical wires 300, 301, 302, 303 and the inlets 210 is air-tightly sealed and air cannot penetrate through the inlets 210. The sealing assembly 1000 comprising the electrical wires 300, 301, 302, 303 may be mounted on an electrical component having an opening, for instance on the terminal box 600, as illustrated in Figure 2. It has to be understood that, in the initial configuration when the plug assembly 100 is inserted into the through-hole 220, the entrance of water or dust into the cover 200, and thus into the electrical wires 300, 301, 302, 303 and/or into the terminal box 600, is prevented, because the sealed system 2000 is air-tightly sealed.

When it is necessary to perform an air leakage test, the disengaging element 400 may be used to disengage the locking elements 124 from the engaging elements 230 and to remove the plug assembly 100 from its position on the cover 200. When the plug assembly 100 is removed, the through-hole 220 is open and is free to accommodate, for instance, a pipe 500 for inserting pressurized air inside the through-hole 220 and into the cover 200. The pipe 500 may be used for instance for injecting pressurized air for leakage tests. Preferably, during the process of performing a leakage test, the gap between the pipe 500 and the pass-through channel 221 may be sealed by means of a single wire seal, for instance a single wire seal similar to the one inserted into the plug assembly 100. When pressurized air is injected through the pipe 500, the air passes through the through-hole 220 and fills the inside of the cover 200. In this way, if there is any leakage in the terminal box 600, for instance if any leakage occurs at the interface between the cover 200 and the terminal box 600, it can be easily detected by means of appropriate means.. For example, leakage tests may be performed by immersing the assembly in a container filled with water and by detecting the formation of potential air bubbles.

After the leakage test has been performed, the pipe 500 may be removed from the through-hole 220 and the plug assembly 100 may again inserted into the through-hole to close the cover 200. The position of the plug assembly 100 is fixed by means of the locking elements 124 engaged with the engaging elements 230 on the cover 200. A perfect sealing of the system is again assured by means of the single wire seal 110 of the plug assembly 100, which seals the pass-through channel 221. In this way, the leakage test process is simplified and it is carried out in a faster and more efficient way.

If the single wire seal 110 is damaged or lost during insertion and removal of the plug assembly 100 from the cover 200, it can be easily replaced by inserting a new single wire seal 110 having the desired features on the pin 123 of the plug assembly 100.

It has to be understood that, even if in Figures 2, 8 and 9 it has been represented that the sealing assembly 1000 may be used for sealing and testing terminal boxes 600 connected to wires 300, 301, 302, 303, the solution can be applied on all new generations of charging inlet platforms, but also on every other system where leakage tests are needed.

While the invention has been described with respect to the preferred physical embodiments constructed in accordance therewith, it will be apparent to those skilled in the art that various modifications, variations and improvements of the present invention may be made in the light of the above teachings and within the purview of the appended claims without departing from the spirit and intended scope of the invention.

For instance, even if only configurations wherein the connections between the electrical wires and the terminals of the electrical components are set at 90° have been disclosed, it is clear that also configurations at 180° are possible. Moreover, it is clear that the position of the through-hole and/or of the inlets on the surfaces of the cover may be changed according to specific needs and that, for instance, the through-hole may be formed on any lateral surface and/or the one or more inlets may be formed on any lateral surface or on the first surface. Preferably, the inlets and the through-hole are formed on different surfaces to simplify insertion of the electrical wires and of the plug assembly.

In addition, those areas in which it is believed that those of ordinary skill in the art are familiar, have not been described herein in order not to unnecessarily obscure the invention described. Accordingly, it has to be understood that the invention is not to be limited by the specific illustrative embodiments, but only by the scope of the appended claims.

For instance, the leakage test process has not been described in detail, because it has been considered known to the skilled person.

### LIST OF REFERENCES

100: plug assembly
110: single wire seal (SWS)
111: recess of the single wire seal
112: lips of the single wire seal
120: plug body
121: flange
122: hollow body
123: pin
124: locking elements
124a: locking tabs
124b: flaps of the locking elements
200: cover
201: first surface
202: lateral surfaces
210: cable inlet
220: through-hole for plug insertion
230: engaging elements
300, 301, 302, 303: cables
400: disengaging element
500: pipe
600: terminal box
601: first surface of the terminal box
602: lateral surfaced of the terminal box
1000: sealing assembly
2000: sealed system

## Claims

1. A sealing assembly (1000) for sealing an electrical component having an opening, said sealing assembly (1000) comprising:
- a cover (200) adapted to be coupled with said electrical component; and
- a plug assembly (100);
wherein said cover (200) has a through-hole (220) for injecting air during leakage tests of said electrical component and engaging elements (230) for fixing said plug assembly (100) to said cover (200), and
wherein said plug assembly (100) comprises: a single wire seal (110) for sealing said through-hole (220); locking elements (124) to be reversibly engaged with said engaging elements (230); a pin (123), on which said single wire seal (110) is inserted, and retaining elements (125) formed at the base of said pin (123) for fixing the position of said single wire seal (110) on said pin (123),
**characterized in that:**
said retaining elements (125) are protruding elements configured to engage mating recesses (111) formed on said single wire seal (110);
so that, when said plug assembly (100) is inserted into said through-hole (220), said cover (200) is adapted to seal in an air tight manner said opening of said electrical component.

2. The sealing assembly (1000) according to claim 1, wherein said retaining elements (125) comprise at least three protruding elements symmetrically formed around said pin (123).

3. The sealing assembly (1000) according to claim 1 or 2, wherein said through-hole (220) comprises a pass-through channel (221) for inserting said single wire seal (110) mounted on said pin (123).

4. The sealing assembly (1000) according to claim 3, wherein said locking elements (124) comprise corresponding flaps (124b) and wherein said through-hole (220) further comprises a cavity (222) surrounding said pass-through channel (221) and configured for receiving the flaps (124b) of said locking elements (124) of said plug assembly (100).

5. The sealing assembly (1000) according to any of previous claims, wherein said cover (200) comprises at least one first surface (201) containing said through-hole (220) and four lateral surfaces (202) perpendicular to said first surface (201), thus defining a housing for accommodating a portion of said electrical component.

6. The sealing assembly (1000) according to any of previous claims, wherein said cover (200) is provided with one or more inlets for inserting one or more electrical wires (300, 301, 302, 303), respectively.

7. A sealed system (2000) comprising:
- the sealing assembly (1000) according to any of previous claims;
- a terminal box (600) comprising a plurality of electrical terminals,
wherein said terminal box (600) has an opening and said cover (200) is adapted to close said opening and to seal said terminal box (600) in an air tight manner.

8. The sealed system (2000) according to claim 7, wherein said cover (200) further comprises a plurality of inlets (210) for inserting a plurality of electrical wires (300, 301, 302, 303) in an air tight manner and said sealed system (2000) is configured so that, when said sealed system (2000) is assembled and said electrical wires (300, 301, 302, 303) are inserted into said inlets (210), said sealed system (2000) is sealed in an airtight manner.

9. A kit of components comprising the following elements:
- A sealing assembly (1000) according to any one of claims 1 to 6;
- A disengaging element (400) for disengaging said locking elements (124) from said engaging elements (230) and removing said plug assembly (100) from said cover (200) of the sealing assembly (1000),
Wherein said disengaging element (400) comprises a gripping part (410) and two protruding elements (420) to be inserted into said locking elements (124) to disengage them from said engaging elements (230).

10. A method for performing leakage tests on an electrical component having an opening, said method comprising:
a) Mounting the sealing assembly (1000) according to any of claims 1 to 6 on said electrical component;
b) Removing said plug assembly (100);
c) Injecting air directly through said through-hole (220); and
d) Detecting air leakage of said electrical component.

11. The method according to claim 10, further comprising the following step:
e) Reversibly closing said through-hole (220) by means of said plug assembly (100).

12. The method according to claims 10 or 11, wherein said step b) is carried out by means of a disengaging element (400) comprising a gripping part (410) and two protruding elements (420) to be inserted into said locking elements (124) to disengage them from said engaging elements (230).

## Patentansprüche

1. Dichtungsbaugruppe (1000) zum Abdichten eines elektrischen Bauteils mit einer Öffnung, wobei die Dichtungsbaugruppe (1000) umfasst:
- eine Abdeckung (200), die mit dem elektrischen Bauteil verbunden werden kann und
- eine Steckverbindung (100),
wobei die Abdeckung (200) ein Durchgangsloch (220) zum Einblasen von Luft während Dichtheitsprüfungen des elektrischen Bauteils und Eingriffselemente (230) zum Befestigen der Steckverbindung (100) an der Abdeckung (200) aufweist und
wobei die Steckverbindung (100) umfasst: eine einzelne Kabeldichtung (110) zum Abdichten des Durchgangslochs (220), Verriegelungselemente (124), die reversibel mit den Eingriffselementen (230) in Eingriff gebracht werden können, einen Stift (123), auf den die einzelne Kabeldichtung (110) aufgesetzt wird, und Halteelemente (125), die an der Basis des Stifts (123) ausgebildet sind, um die Position der einzelnen Kabeldichtung (110) auf dem Stift (123) zu fixieren,
**dadurch gekennzeichnet, dass**
die Halteelemente (125) vorstehende Elemente sind, die so konfiguriert sind, dass sie in passende Aussparungen (111) eingreifen, die auf der einzelnen Kabeldichtung (110) ausgebildet sind,
so dass, wenn die Steckverbindung (100) in das Durchgangsloch (220) eingeführt wird, die Abdeckung (200) so angepasst ist, dass sie die Öffnung des elektrischen Bauteils luftdicht verschließt.

2. Dichtungsbaugruppe (1000) gemäß Anspruch 1, wobei die Halteelemente (125) mindestens drei vorstehende Elemente umfassen, die symmetrisch um den Stift (123) herum ausgebildet sind.

3. Dichtungsbaugruppe (1000) gemäß Anspruch 1 oder 2, wobei das Durchgangsloch (220) einen Durchgangskanal (221) zum Einsetzen der einzelnen Kabeldichtung (110) umfasst, die auf dem Stift (123) montiert ist.

4. Dichtungsbaugruppe (1000) gemäß Anspruch 3, wobei die Verriegelungselemente (124) entsprechende Klappen (124b) umfassen und wobei das Durchgangsloch (220) ferner einen Hohlraum (222) umfasst, welcher den Durchgangskanal (221) umgibt und zur Aufnahme der Klappen (124b) der Verriegelungselemente (124) der Steckverbindung (100) konfiguriert ist.

5. Dichtungsbaugruppe (1000) gemäß einem der vorhergehenden Ansprüche, wobei die Abdeckung (200) mindestens eine erste Fläche (201), die das Durchgangsloch (220) enthält, und vier Seitenflächen (202), die senkrecht zur ersten Fläche (201) stehen, umfasst, wodurch ein Gehäuse zum Aufnehmen eines Teils des elektrischen Bauteils definiert wird.

6. Dichtungsbaugruppe (1000) gemäß einem der vorhergehenden Ansprüche, wobei die Abdeckung (200) mit einem oder mehreren Einlässen zum Einführen eines oder mehrerer elektrischer Kabel (300, 301, 302, 303) versehen ist.

7. Abgedichtetes System (2000), umfassend:
- die Dichtungsbaugruppe (1000) gemäß einem der vorhergehenden Ansprüche,
- einen Anschlusskasten (600), der eine Vielzahl von elektrischen Anschlüssen umfasst,
wobei der Anschlusskasten (600) eine Öffnung aufweist und die Abdeckung (200) so angepasst ist, dass sie die Öffnung verschließt und den Anschlusskasten (600) luftdicht abschließt.

8. Abgedichtetes System (2000) gemäß Anspruch 7, wobei die Abdeckung (200) ferner eine Vielzahl von Einlässen (210) zum luftdichten Einführen einer Vielzahl von elektrischen Kabeln (300, 301, 302, 303) umfasst und das abgedichtete System (2000) so konfiguriert ist, dass das abgedichtete System (2000) luftdicht abgedichtet ist, wenn das abgedichtete System (2000) zusammengebaut ist und die elektrischen Kabel (300, 301, 302, 303) in die Einlässe (210) eingeführt sind.

9. Ein Satz von Komponenten, umfassend die folgenden Elemente:
- eine Dichtungsbaugruppe (1000) gemäß einem der Ansprüche 1 bis 6,
- ein Entriegelungselement (400) zum Lösen der Verriegelungselemente (124) von den Eingriffselementen (230) und zum Entfernen der Steckverbindung (100) aus der Abdeckung (200) der Dichtungsbaugruppe (1000),
wobei das Entriegelungselement (400) ein Greifteil (410) und zwei vorstehende Elemente (420), die in die Verriegelungselemente (124) einzuführen sind, umfasst, um sie von den Eingriffselementen (230) zu lösen.

10. Verfahren zur Durchführung von Dichtheitsprüfungen an einem elektrischen Bauteil mit einer Öffnung, wobei das Verfahren umfasst:
a) Anbringen der Dichtungsbaugruppe (1000) gemäß einem der Ansprüche 1 bis 6 an dem elektrischen Bauteil,
b) Entfernen der Steckverbindung (100),
c) Einblasen von Luft direkt durch das Durchgangsloch (220), und
d) Erfassen eines Luftlecks des elektrischen Bauteils.

11. Verfahren gemäß Anspruch 10, welches ferner den folgenden Schritt umfasst:
e) reversibles Verschließen des Durchgangslochs (220) mittels der Steckverbindung (100).

12. Verfahren gemäß Anspruch 10 oder 11, wobei der Schritt b) mittels eines Entriegelungselements (400) ausgeführt wird, welches ein Greifteil (410) und zwei vorstehende Elemente (420), die in die Verriegelungselemente (124) einzuführen sind, umfasst, um sie von den Eingriffselementen (230) zu lösen.

## Revendications

1. Ensemble d'étanchéité (1000) pour étanchéifier un composant électrique présentant une ouverture, ledit ensemble d'étanchéité (1000) comprenant :
- un capot (200) adapté pour être couplé avec ledit composant électrique ; et
- un ensemble de fiche (100) ;
dans lequel ledit capot (200) présente un trou traversant (220) pour injecter de l'air au cours de tests de fuite dudit composant électrique et des éléments de contact (230) pour fixer l'ensemble de fiche (100) audit capot (200), et
dans lequel ledit ensemble de fiche (100) comprend : un joint de fil unique (110) pour étanchéifier ledit trou traversant (220) ; des éléments de verrouillage (124) pour être en contact réversible avec lesdits éléments (230) ; une goupille (123), sur laquelle un joint de fil unique (110) est inséré, et des éléments de maintien (125) formés à la base de ladite goupille (123) pour fixer la position dudit joint de fil unique (110) sur ladite goupille (123),
lesdits éléments de maintien (125) sont des éléments débordants configurés pour entrer en contact avec des cavités de couplage (111) formées sur ledit joint de fil unique (110) ;
de sorte que, lorsque l'ensemble de fiche (100) est inséré dans ledit trou traversant (220), ledit capot (200) est adapté pour sceller d'une manière étanche à l'air une ouverture dudit composant électrique.

2. L'ensemble d'étanchéité (1000) selon la revendication 1, dans lequel lesdits éléments de maintien (125) comprennent au moins trois éléments débordants formés symétriquement autour de ladite goupille (123).

3. L'ensemble d'étanchéité (1000) selon la revendication 1 ou 2, dans lequel ledit trou traversant (220) comprend un canal traversant (221) pour insérer ledit joint de fil unique (110) monté sur ladite goupille (123).

4. L'ensemble d'étanchéité (1000) selon la revendication 3, dans lequel lesdits éléments de verrouillage (124) comprennent des languettes correspondantes (124b) et dans lequel ledit trou traversant (220) comprend en outre une cavité (222) entourant ledit canal traversant (221) et configuré pour recevoir les languettes (124b) desdits éléments de verrouillage (124) dudit ensemble de fiche (100).

5. L'ensemble d'étanchéité (1000) selon l'une quelconque des revendications précédentes, dans lequel ledit capot (200) comprend au moins une première surface (201) contenant ledit trou traversant (220) et quatre surfaces latérales (202) perpendiculaires à ladite première surface (201), définissant ainsi un boîtier pour accueillir une partie dudit composant électrique.

6. L'ensemble d'étanchéité (1000) selon l'une quelconque des revendications précédentes, dans lequel ledit capot (200) est doté d'une ou plusieurs entrées pour insérer un ou plusieurs fils électriques (300, 301, 302, 303), respectivement.

7. Système étanche (2000) comprenant :
- l'ensemble d'étanchéité (1000) selon l'une quelconque des revendications précédentes ;
- un boîtier de bornes (600) comprenant une pluralité de bornes électriques,
dans lequel ledit boîtier de bornes (600) présente une ouverture et ledit capot (200) est adapté pour fermer ladite ouverture et pour étanchéifier ledit boîtier de bornes (600) d'une manière étanche à l'air.

8. Le système étanche (2000) selon la revendication 7, dans lequel ledit capot (200) comprend en outre une pluralité d'entrées (210) pour insérer une pluralité de fils électriques (300, 301, 302, 303) d'une manière étanche à l'air et ledit système étanche (2000) est configuré de sorte que, lorsque ledit système étanche (2000) est assemblé et lesdits fils électriques (300, 301, 302, 303) sont insérés dans lesdites entrées (210), ledit système étanche (2000) est étanchéifié d'une manière étanche à l'air.

9. Kit de composants comprenant les éléments suivants :
- un ensemble d'étanchéité (1000) selon l'une quelconque des revendications 1 à 6 ;
- un élément de désolidarisation (400) pour désolidariser lesdits éléments de verrouillage (124) desdits éléments de contact (230) et retirer ledit ensemble de fiche (100) dudit capot (200) de l'ensemble d'étanchéité (1000),
dans lequel ledit élément de désolidarisation (400) comprend une partie de saisie (410) et deux éléments débordants (420) à insérer dans lesdits éléments de verrouillage (124) pour les désolidariser desdits éléments de contact (230).

10. Procédé pour effectuer des tests de fuite sur un composant électrique présentant une ouverture, ledit procédé comprenant :
a) un montage de l'ensemble d'étanchéité (1000) selon l'une quelconque des revendications 1 à 6 sur ledit composant électrique ;
b) un retrait dudit ensemble de fiche (100) ;
c) une injection d'air directement à travers ledit trou traversant (220) ; et
d) une détection de fuite d'air dudit composant électrique.

11. Le procédé selon la revendication 10, comprenant en outre l'étape suivante :
e) une fermeture réversible dudit trou traversant (220) au moyen dudit ensemble de fiche (100).

12. Le procédé selon la revendication 10 ou 11, dans lequel ladite étape b) est exécutée au moyen d'un élément de désolidarisation (400) comprenant une partie de saisie (410) et deux éléments débordants (420) à insérer dans lesdits éléments de verrouillage (124) pour les désolidariser desdits éléments de contact (230).
